# EUROPÄISCHE PATENTSCHRIFT

(11) **EP 0 796 425 B1**
(45) Veröffentlichungstag und Bekanntmachung des Hinweises auf die Patenterteilung: **23.09.1998**
(21) Anmeldenummer: 95937752.4
(22) Anmeldetag: 11.11.1995
(51) Int. Cl.: G01K 7/42

(54) **VERFAHREN ZUR BILDUNG EINES SIGNALS BEZÜGLICH DER TEMPERATUR DER VON EINER BRENNKRAFTMASCHINE ANGESAUGTEN LUFT**
PROCESS FOR FORMING A SIGNAL FOR THE SUCTION AIR TEMPERATURE OF AN INTERNAL COMBUSTION ENGINE
PROCEDE DE FORMATION D'UN SIGNAL RELATIF A LA TEMPERATURE DE L'AIR ASPIRE PAR UN MOTEUR A COMBUSTION INTERNE

(30) Priorität: 09.12.1994 DE 4443812
(43) Veröffentlichungstag der Anmeldung: 24.09.1997
(73) Patentinhaber: ROBERT BOSCH GMBH, 70442 Stuttgart (DE)
(72) Erfinder: RANDOLL, Helmut, D-71665 Vaihingen (DE); ROTH, Andreas, F-95330 Domont (FR)
(86) Internationale Anmeldenummer: DE9501560
(87) Internationale Veröffentlichungsnummer: WO9618090

(56) Entgegenhaltungen:
- DE-A- 2 715 738
- DE-A- 2 731 541
- DE-A- 4 121 396
- DE-A- 4 338 342
- PATENT ABSTRACTS OF JAPAN vol. 9 no. 72 (P-345) [1795] ,2.April 1985 & JP,A,59 203931 (KAWASAKI SEITETSU K.K.) 19.November 1984,

## Beschreibung

### Stand der Technik

Die Erfindung geht aus von einem Verfahren zur Bildung eines Signals bezüglich der Temperatur der von einer Brennkraftmaschine angesaugten Luft gemäß dem Oberbegriff des Anspruchs 1.

Bei modernen Brennkraftmaschinen wird die zugemessene Kraftstoffmenge genau auf die von der Brennkraftmaschine angesaugte Luftmenge angepaßt. Die Luftmenge wird mittels eines geeigneten Meßverfahrens ermittelt. Bei diesem Meßverfahren wird beispielsweise mit einem im Ansaugtrakt der Brennkraftmaschine angebrachten Drucksensor eine Druckmessung durchgeführt und zur Ermittlung der Luftmenge wird die so gewonnene Druckinformation abhängig von der Temperatur der angesaugten Luft korrigiert, um die Temperaturabhängigkeit der Luftdichte zu kompensieren. Die Temperatur der angesaugten Luft wird mit einem Temperatursensor ermittelt, der im Ansaugtrakt der Brennkraftmaschine angeordnet ist. Die Genauigkeit der Temperaturerfassung kann allerdings dadurch beeinträchtigt werden, daß bei hohen Temperaturen im Motorraum Strahlungswärme an den Temperatursensor und dessen Umgebung übertragen wird.

Außerdem besitzt der Temperatursensor eine gewisse Trägheit, so daß es insbesondere bei schnellen Änderungen der Temperatur der angesaugten Luft, beispielsweise bei einer Beschleunigung des Fahrzeugs, ebenfalls zu einer Beeinträchtigung der Genauigkeit der Temperaturerfassung kommen kann.

Der Erfindung liegt die Aufgabe zugrunde, ein Signal bereitzustellen, das die Temperatur der angesaugten Luft sehr genau wiedergibt. Diese Aufgabe wird durch den Anspruch 1 und die nachfolgend beschriebenen vorteilhaften Ausgestaltungen und Weiterbildungen gelöst.

### Vorteile der Erfindung

Die Erfindung hat den Vorteil, daß sie eine sehr genaue Ermittlung der Temperatur der von der Brennkraftmaschine angesaugten Luft ermöglicht. Beim erfindungsgemäßen Verfahren wird ein Signal für die Temperatur der angesaugten Luft ausgehend von einem Signal für die Temperatur der Brennkraftmaschine und einem Signal für die Umgebungstemperatur gebildet. Dies hat den Vorteil, daß ein Sensor zur Erfassung der Temperatur der angesaugten Luft eingespart werden kann. Die Sensoren für die Motortemperatur und die Umgebungstemperatur sind in der Regel ohnehin vorhanden.

Bei der Bildung des Signals für die Temperatur der angesaugten Luft wird ein Korrekturfaktor berücksichtigt, der von einem Signal für die von der Brennkraftmaschine angesaugte Luftmasse oder Luftmenge und einem Signal für die Fahrzeuggeschwindigkeit abhängt.

Besonders vorteilhaft ist es, das Signal für die Temperatur der angesaugten Luft zu filtern, da dadurch das Zeitverhalten sehr genau nachgebildet werden kann. Dabei ist es zweckmäßig, bei steigender und bei fallender Temperatur der angesaugten Luft unterschiedliche Zeitkonstanten für die Filterung zu verwenden.

### Zeichnung

Die Erfindung wird nachstehend anhand des in der Zeichnung dargestellten Ausführungsbeispiels erläutert. Es zeigen
Figur 1 eine Prinzipdarstellung des technischen Umfelds, in dem die Erfindung eingesetzt werden kann,
Figur 2 ein Flußdiagramm zur Veranschaulichung des erfindungsgemäßen Verfahrens und
Figur 3 eine Tabelle eines bei dem erfindungsgemäßen Verfahren eingesetzten Kennfelds.

### Beschreibung der Ausführungsbeispiele

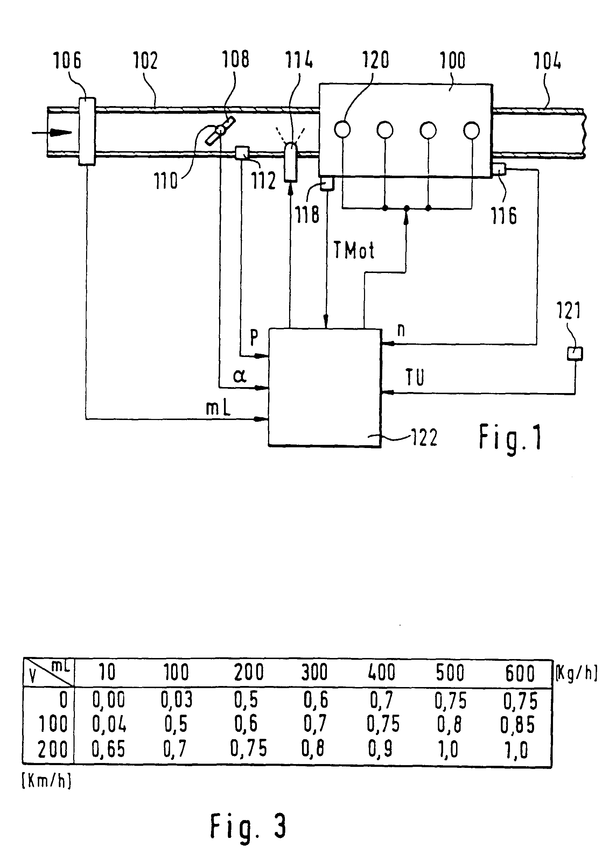

Figur 1 zeigt eine schematische Darstellung des technischen Umfelds, in dem die Erfindung eingesetzt werden kann. Einer Brennkraftmaschine 100 wird über einen Ansaugtrakt 102 Luft/Kraftstoff-Gemisch zugeführt und die Abgase werden in einen Abgaskanal 104 abgegeben. Im Ansaugtrakt 102 sind - in Stromrichtung der angesaugten Luft gesehen - ein Luftmengenmesser oder Luftmassenmesser 106, beispielsweise ein Heißfilm-Luftmassenmesser, eine Drosselklappe 108 mit einem Sensor 110 zur Erfassung des Öffnungswinkels der Drosselklappe 108, ein Drucksensor 112 und wenigstens eine Einspritzdüse 114 angeordnet. Der Luftmengenmesser oder Luftmassenmesser 106 und der Drucksensor 112 sind in der Regel alternativ vorhanden. An der Brennkraftmaschine 100 sind ein Drehzahlsensor 116 und ein Temperatursensor 118 angebracht. Weiterhin besitzt die Brennkraftmaschine 100 beispielsweise vier Zündkerzen 120 zur Zündung des Luft/Kraftstoff-Gemisches in den Zylindern. An einer geeigneten Stelle des Kraftfahrzeugs, z. B. im Außenspiegel, ist ein Temperatursensor 121 zur Erfassung der Umgebungstemperatur angebracht. Die Ausgangssignale mL des Luftmengenmessers oder Luftmassenmessers 106, a des Sensors 110 zur Erfassung des Öffnungswinkels der Drosselklappe 108, P des Drucksensors 112 (in der Regel alternativ zum Signal mL), n des Drehzahlsensors 116, TMot des Temperatursensors 118 und TU des Temperatursensors 121 werden über entsprechende Verbindungsleitungen einem zentralen Steuergerät 122 zugeführt. Das Steuergerät 122 steuert über weitere Verbindungsleitungen das Einspritzventil bzw. die Einspritzventile 114 und die Zündkerzen 120. Weiterhin führt das Steuergerät das erfindungsgemäße Verfahren durch.

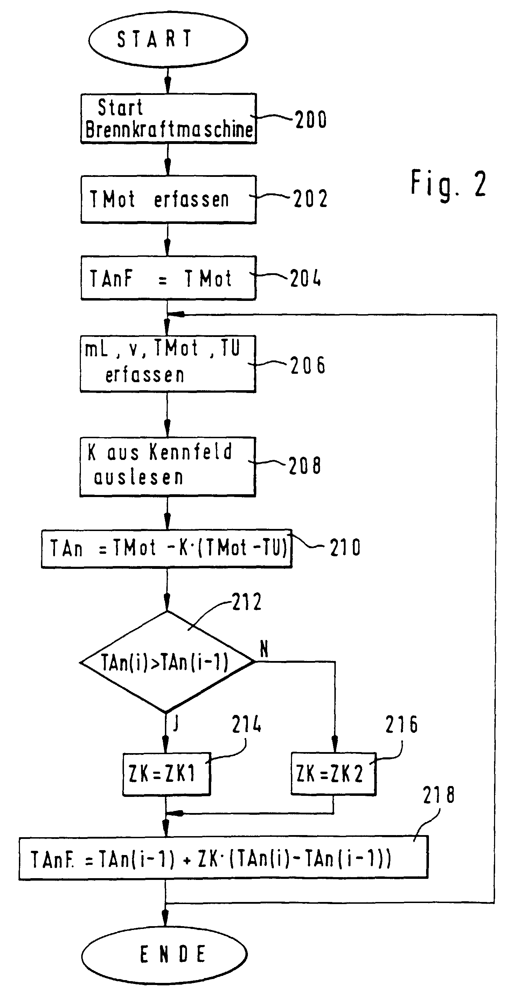

Figur 2 zeigt ein Flußdiagramm zur Veranschaulichung des erfindungsgemäßen Verfahrens. In einem ersten Schritt 200 wird die Brennkraftmaschine 100 gestartet. An den Schritt 200 schließt sich ein Schritt 202 an, in dem die Temperatur der Brennkraftmaschine 100 erfaßt wird und als Signal TMot bereitgestellt wird. Auf Schritt 202 folgt ein Schritt 204, in dem ein Signal TAnF, das einen gefilterten Wert der Temperatur der angesaugten Luft repräsentiert, auf den Wert gesetzt wird, den das Signal TMot für die Temperatur der Brennkraftmaschine 100 angibt. Schritt 204 dient der Initialisierung und wird in der Regel lediglich einmal unmittelbar nach Starten der Brennkraftmaschine 100 durchgeführt. Danach wird das Signal TAnF nach dem im folgenden geschilderten Verfahren ermittelt.

An Schritt 204 schließt sich ein Schritt 206 an, in dem eine Reihe von Betriebskenngrößen erfaßt werden, die für die Bildung des gefilterten Signals TAnF für die Temperatur der von der Brennkraftmaschine 100 angesaugten Luft benötigt werden. Im einzelnen handelt es sich dabei um das Signal mL für die von der Brennkraftmaschine 100 angesaugte Luftmenge bzw. Luftmasse, das Signal v für die Fahrzeuggeschwindigkeit, das Signal TMot für die Temperatur der Brennkraftmaschine 100 und das Signal TU für die Umgebungstemperatur. Das Signal mL kann mit dem Lufmengenmesser oder Luftmassenmesser 106 erzeugt werden oder aus dem Signal P des Drucksensors 112 und dem Signal n des Drehzahlsensors 116 ermittelt werden. An Schritt 206 schließt sich ein Schritt 208 an. In Schritt 208 wird ein Korrekturfaktor K aus einem Kennfeld ausgelesen, das über die angesaugte Luftmasse bzw. Luftmenge mL und die Fahrzeuggeschwindigkeit v aufgespannt ist. Statt dieses Kennfelds kann auch eine Kennlinie zum Einsatz kommen, in der die Abhängigkeit von der Luftmenge bzw. Luftmasse mL abgelegt ist, d. h. der Korrekturfaktor K kann auch allein von der Luftmenge bzw. Luftmasse mL abhängen. An Schritt 208 schließt sich ein Schritt 210 an, in dem aus den in Schritt 206 ermittelten Signalen TMot und TU und dem in Schritt 208 ermittelten Korrekturfaktor K ein Signal TAn für die Temperatur der von der Brennkraftmaschine 100 angesaugten Luft ermittelt wird. Dazu wird der Korrekturfaktor K mit der Differenz aus den Signalen TMot und TU für die Motortemperatur bzw. die Umgebungstemperatur multipliziert. Das Ergebnis dieser Multiplikation wird vom Signal TMot für die Temperatur der Brennkraftmaschine 100 subtrahiert und auf diese Weise ein Wert für das Signal TAn ermittelt.

Um zu berücksichtigen, daß die Temperatur der angesaugten Luft einer raschen Änderung der Betriebsbedingungen mit einer gewissen Trägheit hinterherhinkt, da der Ansaugtrakt 102 wie ein Wärmespeicher wirkt, wird das Signal TAn für die Temperatur der angesaugten Luft gefiltert. Die Filterung kann für steigende und fallende Temperatur der angesaugten Luft mit unterschiedlichen Zeitkonstanten ZK1 und ZK2 erfolgen. Im einzelnen werden im Zusammenhang mit der Filterung folgende Schritte durchgeführt:

In der sich an Schritt 210 anschließenden Abfrage 212 wird abgefragt, ob der Wert TAn(i) der Temperatur der angesaugten Luft größer ist als der vorhergehende Wert TAn(i-1). Ist dies der Fall, so steigt die Temperatur der angesaugten Luft an und es schließt sich an Abfrage 212 ein Schritt 214 an, in dem der Zeitkonstanten ZK der Wert ZK1 zugewiesen wird. Ist Abfrage 212 dagegen nicht erfüllt, das heißt sinkt die Temperatur der angesaugten Luft, so schließt sich an Abfrage 212 ein Schritt 216 an, in dem der Zeitkonstanaten ZK ein Wert ZK2 zugewiesen wird. Sowohl an Schritt 214 als auch an Schritt 216 schließt sich ein Schritt 218 an. In Schritt 218 wird ein gefiltertes Signal TAnF für die Temperatur der angesaugten Luft ermittelt. Dazu wird die Differenz zweier aufeinanderfolgender Werte TAn(i) und TAn(i-1) der Temperatur der angesaugten Luft mit der Zeitkonstanten ZK multipliziert. Das Ergebnis dieser Multiplikation wird zum Wert TAn(i-1) für die Temperatur der angesaugten Luft addiert. Das so erzeugte gefilterte Signal TAnF für die Temperatur der angesaugten Luft kann dann den gewünschten Anwendungen zugeführt werden. Es kann beispielsweise zur Korrektur des Signals P für den Druck im Ansaugtrakt oder des Signals mL für die angesaugte Luftmenge bzw. Luftmasse verwendet werden. Mit Schritt 218 ist der Durchlauf des Flußdiagramms beendet und beginnt erneut mit Schritt 206.

Figur 3 zeigt eine mögliche Dimensionierung des Kennfelds zur Ermittlung des Korrekturfaktors K, das über den Signalen v für die Fahrzeuggeschwindigkeit und mL für die von der Brennkraftmaschine 100 angesaugte Luftmenge bzw. Luftmasse aufgespannt ist. Bei einer sehr niedrigen Fahrzeuggeschwindigkeit, z.B. bei Stillstand des Fahrzeugs, und bei einer sehr geringen angesaugten Luftmenge bzw. Luftmasse, z.B. im Leerlauf, besitzt der Korrekturfaktor K den Wert 0. Somit führt die in Schritt 210 der Figur 2 durchgeführte Berechnung dazu, daß das Signal TAn für die Temperatur der angesaugten Luft gleich dem Signal TMot für die Temperatur der Brennkraftmaschine 100 ist. Im anderen Extremfall, bei sehr hoher Fahrzeuggeschwindigkeit und einer sehr hohen angesaugten Luftmenge bzw. Luftmasse besitzt der Korrekturfaktor K den Wert 1. Folglich führt die Berechnung gemäß Schritt 210 der Figur 2 dazu, daß das Signal TAn für die Temperatur der angesaugten Luft gleich dem Signal TU für die Umgebungstemperatur ist. Somit variiert die Temperatur der angesaugten Luft zwischen der Temperatur der Brennkraftmaschine 100 und der Umgebungstemperatur, je nach dem wie schnell sich das Fahrzeug bewegt und welche Luftmenge bzw. Luftmasse von der Brennkraftmaschine angesaugt wird.

## Patentansprüche

1. Verfahren zur Bildung eines Signals (TAn) bezüglich der Temperatur der von einer Brennkraftmaschine (100) angesaugten Luft, dadurch gekennzeichnet, daß das Signal (TAn) für die Temperatur der angesaugten Luft ausgehend von einem Signal (TMot) für die Temperatur der Brennkraftmaschine (100) und einem Signal (TU) für die Umgebungstemperatur gebildet wird.

2. Verfahren nach Anspruch 1, dadurch gekennzeichnet, daß bei der Bildung des Signals (TAn) für die Temperatur der angesaugten Luft ein Korrekturfaktor (K) berücksichtigt wird, der von einem Signal (mL) für die von der Brennkraftmaschine (100) angesaugten Luftmasse oder Luftmenge und/oder einem Signal (v) für die Fahrzeuggeschwindigkeit abhängt.

3. Verfahren nach Anspruch 2, dadurch gekennzeichnet, daß zur Bildung des Signals (TAn) für die Temperatur der angesaugten Luft die Differenz aus dem Signal (TMot) für die Temperatur der Brennkraftmaschine (100) und dem Signal (TU) für die Umgebungstemperatur mit dem Korrekturfaktor (K) multipliziert wird und das Ergebnis der Multiplikation vom Signal (TMot) für die Temperatur der Brennkraftmaschine (100) subtrahiert wird.

4. Verfahren nach einem der vorhergehenden Ansprüche, dadurch gekennzeichnet, daß das Signal (TAn) für die Temperatur der angesaugten Luft gefiltert wird.

5. Verfahren nach Anspruch 4, dadurch gekennzeichnet, daß bei steigender und bei fallender Temperatur der angesaugten Luft unterschiedliche Zeitkonstanten (ZK1, ZK2) für die Filterung verwendet werden.

6. Verfahren nach einem der Ansprüche 4 oder 5, dadurch gekennzeichnet, daß das gefilterte Signal (TAnF) für die Temperatur der angesaugten Luft zur Korrektur eines Signals (P) für den Druck im Ansaugtrakt (102) oder zur Korrektur des Signals (mL) für die von der Brennkraftmaschine (100) angesaugte Luftmenge oder Luftmasse verwendet wird.

7. Vorrichtung zur Bildung eines Signals (TAn) bezüglich der Temperatur der von einer Brennkraftmaschine (100) angesaugten Luft, dadurch gekennzeichnet, daß
- Mittel (118) vorgesehen sind zur Erzeugung eines Signals (TMot) für die Temperatur der Brennkraftmaschine (100),
- Mittel (121) zur Erzeugung eines Signals (TU) für die Umgebungstemperatur und
- Mittel (122) zur Bildung des Signals (TAn) für die Temperatur der angesaugten Luft ausgehend von dem Signal (TMot) für die Temperatur der Brennkraftmaschine (100) und dem Signal (TU) für die Umgebungstemperatur.

## Claims

1. Method for forming a signal (TAn) relating to the temperature of the intake air of an internal combustion engine (100), characterized in that the signal (TAn) for the temperature of the intake air is formed from a signal (TMot) for the temperature of the internal combustion engine (100) and from a signal (TU) for the ambient temperature.

2. Method according to Claim 1, characterized in that, the formation of the signal (TAn) for the temperature of the intake air takes into account a correcting factor (K) which depends on a signal (mL) for the intake air mass or air quantity of the internal combustion engine (100) and/or on a signal (v) for the vehicle speed.

3. Method according to Claim 2, characterized in that, in order to form the signal (TAn) for the temperature of the intake air, the difference between the signal (TMot) for the temperature of the internal combustion engine (100) and the signal (TU) for the ambient temperature is multiplied by the correcting factor (K) and the result of the multiplication is subtracted from the signal (TMot) for the temperature of the internal combustion engine (100).

4. Method according to one of the preceding claims, characterized in that the signal (TAn) for the temperature of the intake air is filtered.

5. Method according to Claim 4, characterized in that different time constants (ZK1, ZK2) for filtering are used in the case of a rising and a falling temperature of the intake air.

6. Method according to one of Claims 4 or 5, characterized in that the filtered signal (TAnF) for the temperature of the intake air is used for correcting a signal (P) for the pressure in the intake tract (102) or for correcting the signal (mL) for the intake air quantity or air mass of the internal combustion engine (100).

7. Device for forming a signal (TAn) relating to the temperature of the intake air of an internal combustion engine (100), characterized in that
- means (118) are provided for generating a signal (TMot) for the temperature of the internal combustion engine (100),
- means (121) are provided for generating a signal (TU) for the ambient temperature, and
- means (122) are provided for forming the signal (TAn) for the temperature of the intake air from the signal (TMot) for the temperature of the internal combustion engine (100) and from the signal (TU) for the ambient temperature.

## Revendications

1. Procédé pour former un signal (TAn) relatif à la température de l'air aspiré par un moteur à combustion interne (100),
caractérisé en ce que
le signal (TAn) de la température de l'air aspiré est obtenu à partir d'un signal (TMot) de la température du moteur à combustion interne (100) et d'un signal (TU) de la température ambiante.

2. Procédé selon la revendication 1,
caractérisé en ce qu'
en formant le signal (TAn) de la température de l'air aspiré, on tient compte d'un coefficient de correction (K) dépendant d'un signal (mL) de la masse ou quantité d'air aspirée par le moteur à combustion interne (100) et/ou d'un signal (v) de la vitesse de déplacement du véhicule.

3. Procédé selon la revendication 2,
caractérisé en ce que
pour former le signal (TAn) de la température de l'air aspiré, on multiplie la différence du signal (TMot) de la température du moteur à combustion interne (100) et du signal (TU) de la température ambiante, par le coefficient de correction (K), et on retranche le résultat de la multiplication, du signal (TMot) de la température du moteur à combustion interne (100).

4. Procédé selon l'une des revendications précédentes,
caractérisé en ce que
le signal (TAn) de la température de l'air aspiré est filtré.

5. Procédé selon la revendication 4,
caractérisé en ce qu'
en cas d'augmentation et de diminution de la température de l'air aspiré, on utilise des constantes de temps différentes (ZK1, ZK2) pour le filtrage.

6. Procédé selon l'une quelconque des revendications 4 et 5,
caractérisé en ce qu'
on utilise le signal filtré (TAnF) de la température de l'air aspiré pour corriger un signal (P) de la pression dans la tubulure d'aspiration (102), ou pour corriger le signal (mL) de la quantité ou masse d'air aspirée par le moteur à combustion interne (100).

7. Dispositif pour former un signal (TAn) relatif à la température de l'air aspiré par un moteur à combustion interne (100),
caractérisé par
- des moyens (118) pour générer un signal (TMot) de la température du moteur à combustion interne (100),
- des moyens (121) pour générer un signal (TU) de la température ambiante, et
- des moyens (122) pour former le signal (TAn) de la température de l'air aspiré à partir du signal (TMot) de la température du moteur à combustion interne (100) et du signal (TU) de la température ambiante.
